# EUROPÄISCHE PATENTSCHRIFT

(11) **EP 1 008 736 B1**
(45) Veröffentlichungstag und Bekanntmachung des Hinweises auf die Patenterteilung: **15.12.2004**
(21) Anmeldenummer: 99122741.4
(22) Anmeldetag: 16.11.1999
(51) Int. Cl.: F02B 77/10, F02B 75/22

(54) **Flammendurchschlagsicherung für einen Gasmotor**
Flame arrester for a gas engine
Arrêteur de flammes pour un moteur à gaz

(30) Priorität: 10.12.1998 DE 19856993
(43) Veröffentlichungstag der Anmeldung: 14.06.2000
(73) Patentinhaber: DEUTZ Aktiengesellschaft, 51063 Köln (DE)
(72) Erfinder: Weickel, Hans, 68307 Mannheim (DE); Gerstner, Hans, 68542 Heddesheim (DE); Goerdes, Ute, 68309 Mannheim (DE)

(56) Entgegenhaltungen:
- DE-A- 3 536 522
- US-A- 4 100 905
- US-A- 4 893 591
- US-A- 5 375 565

## Beschreibung

Die Erfindung betrifft eine Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinderrohr bewegbar ist, wobei in dem Zylinderkopf eingelassene Gaswechselventile über zumindest je einen Auslasskanal und einen Einlasskanal mit einer Abgasleitung und einer Gemischleitung verbunden sind, und wobei eine Flammendurchschlagsicherungseinrichtung im Bereich zwischen Einlasskanal und Gemischleitung angeordnet ist.

Eine derartige Brennkraftmaschine ist aus der US 5,375,565 bekannt. Die in diesem Dokument beschriebene Brennkraftmaschine weist eine Flammendurchschlagsicherung auf, die direkt an einem Zylinderkopf der Brennkraftmaschine im Anschlussbereich des Einlasskanals zu einem Verbindungsrohr zu einer Gemischleitung angeordnet ist. Die Ausgestaltung dieser Flamrnendurchschlagsicherung ist an die konstruktiven Gegebenheiten des Einbauorts angepasst.

Weiterhin sind Flammendurchschlagsicherungen bei Gasmotoren bekannt und müssen zur Verhinderung eines Flammendurchschlages von den Einlasskanälen der Brennkraftmaschine zu den Drosseleinrichtungen hin verbaut werden. Dabei werden bei bekannten Systemen diese Flammendurchschlagsicherungseinrichtungen direkt hinter den Gasmischern bzw. Ladeluftkühlern angebaut. Sie benötigen hierfür ein eigenes aufwendig gestaltetes und zu befestigendes Gehäuse, in das die eigentlichen Flammendurchschlagsicherungen eingebaut werden. Diese Flammendurchschlagsicherungen sind als Bandsicherungen in einem sogenannten Rostkäfig eingespannt und darin durch eine Drahtzwischenlage auf einen bestimmten definierten geringen Abstand voneinander getrennt gehalten.

Der Erfindung liegt die Aufgabe zugrunde, die Wirksamkeit und den Anbau solcher Flammendurchschlagsicherungseinrichtungen zu verbessern.

Diese Aufgabe wird dadurch gelöst, dass die Brennkraftmaschine gasbetrieben ist, dass die Flammendurchschlagsicherungseinrichtung ein Gehäuse aufweist, das in die Gemischleitung eingesetzt ist und dass eine Flammendurchschlagsicherungseinrichtung zwei Einlasskanälen zugeordnet ist. Durch diese Anordnung nahe des Ursprungs des möglichen Flammrückschlages ist zunächst einmal eine Beeinflussung der Gemischversorgung der weiteren Zylinder der Brennkraftmaschine ausgeschlossen. Weiterhin lässt sich die Flammendurchschlagsicherungseinrichtung in diesem Bereich leichter und kostengünstiger montieren. Schließlich lassen sich durch diese Anordnung die Druckverluste gering halten. Dadurch, dass eine Flammendurchschlagsicherungseinrichtung zwei Einlasskanälen zugeordnet ist und die Gasmotoren in aller Regel als mehrzylindrige Brennkraftmaschinen mit insbesondere 8, 12 oder 16 Zylindern gebaut werden, ist eine gegenseitige Beeinflussung der Einlasskanäle durch die zugeordnete Flammendurchschlagsicherungseinrichtung wegen des Zündversatzes ausgeschlossen.

In weiterer Ausgestaltung weist das Gehäuse der Flammendurchschlagsicherungseinrichtung zwei Auslässe auf. Diese Auslässe sind mit benachbarten Einlasskanälen verbunden, während das Gehäuse in die Gemischleitung eingesetzt ist. Hierzu weist die Gemischleitung bevorzugt eine entsprechende Ausnehmung auf, in die das Gehäuse bevorzugt eingeschraubt wird. In diesem Zusammenhang ist es grundsätzlich möglich, die Brennkraftmaschine sowohl bei einer Ausbildung als Gasmotor als auch als diesel- oder schwerölbetriebene Brennkraftmaschine in dieser Art und Weise auszubilden, wobei dann bei der Ausbildung als Gasmotor in dieses Gehäuse eine oder mehrere Flammendurchschlagsicherungen eingesetzt werden. Dadurch wird die Teilevielfalt reduziert.

Weiterhin weist das Gehäuse auf der den Auslässen gegenüberliegenden Seite Einlaßöffnungen auf, die in einen Innenraum des Gehäuses und von diesen in die Auslässe münden. Dabei sind die Einlaßöffnungen so in Bezug zu der Strömung in der Gemischleitung angeordnet, daß eine Beeinflussung der Gas-Luft-Mischung bzw. der Luft alleine weitgehend ausgeschlossen ist. In diese Einlaßöffnungen werden dann die einzelnen Flammendurchschlagsicherungen eingesetzt. Bevorzugt sind in ein Gehäuse drei Einlaßöffnungen eingelassen, in die entsprechende Flammendurchschlagsicherungen eingebaut sind. Dabei sind die Einlaßöffnungen so ausgebildet, daß gleiche Flammendurchschlagsicherungen verbaut werden können. Diese Ausbildung ist durch den zwischen den einzelnen Zylindern zur Verfügung stehenden Bauraum ohne weiteres realisierbar, wobei durch diese erfindungsgemäße Ausgestaltung ein dreifach größerer Strömungsquerschnitt als bei nur einer Einlaßöffnung zur Verfügung steht. Da, wie schon zuvor ausgeführt worden ist, zwischen zwei benachbarten Zylindern bei mehrzylindrigen Brennkraftmaschinen ein Zündversatz besteht, ist eine nachteilige Beeinflussung des benachbarten Zylinders bei einem Flammrückschlag ausgeschlossen, da diesem zum Zeitpunkt des Flammrückschlags kein Gemisch zugeführt wird. Dies bedeutet umgekehrt, daß die durch die drei Flammendurchschlagsicherungen durchströmende Gemischmenge nur jeweils einem Zylinder zugeführt wird. Das heißt also, bei relativ kleinem Durchmesser der einzelnen Flammendurchschlagsicherungen wird ohne relevanten Druckverlust die nötige Gemischmenge dem einzelnen Zylinder zugeführt.

In Weiterbildung der Erfindung ist die Gemischleitung modular aufgebaut, wobei ein derartiges Modul bei einem Reihenmotor zwei Zylindern und bei einem V-Motor vier Zylindern zugeordnet ist. Dabei ist diese Modul bei dem V-Motor mittig durch eine Trennwand getrennt, so daß eine Beeinflussung der gegenüberliegenden Zylinderreihen wiederum ausgeschlossen ist.

Die Zuordnung der Flammendurchschlagsicherungseinrichtung zu je zwei Zylindern bewirkt neben den zuvor beschriebenen Vorteilen auch eine Reduzierung der Herstellungskosten, da das erfindungsgemäße Gehäuse auch in den erforderlichen größeren Stückzahlen erheblich günstiger als das den Gasmischern bzw. Ladeluftkühlern zugeordnete Gehäuse gebaut bzw. hergestellt werden kann und auch die hier eingesetzten kleineren Flammendurchschlagsicherungen auch bei Berücksichtigung der benötigten höheren Stückzahlen trotzdem erheblich kostengünstiger sind. Zudem bewirkt die erfindungsgemäße Anordnung und Ausgestaltung der Flammendurchschlagsicherungseinrichtungen eine Homogenisierung des Gas-Luft-Gemisches, das den einzelnen Zylindern zugeführt wird.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Figur 1:: eine Ansicht der Brennkraftmaschine mit in die Gemischleitung eingesetzten Flammendurchschlagsicherungseinrichtungen,
- Figur 2:: einen Querschnitt durch die Gemischleitung mit eingesetzten Flammendurchschlagsicherungseinrichtungen,
- Figur 3:: eine Ansicht einer Flammendurchschlagsicherungseinrichtung von der Auslaßseite,
- Figur 4:: eine Längsseitenansicht der Flammendurchschlagsicherungseinrichtung,
- Figur 5:: eine perspektivische Ansicht von der Einlaßseite der Flammendurchschlagsicherungseinrichtung,
- Figur 6:: einen Seitenansicht A-A gemäß Figur 3 und
- Figur 7:: einen Schnitt B-B gemäß Figur 3.

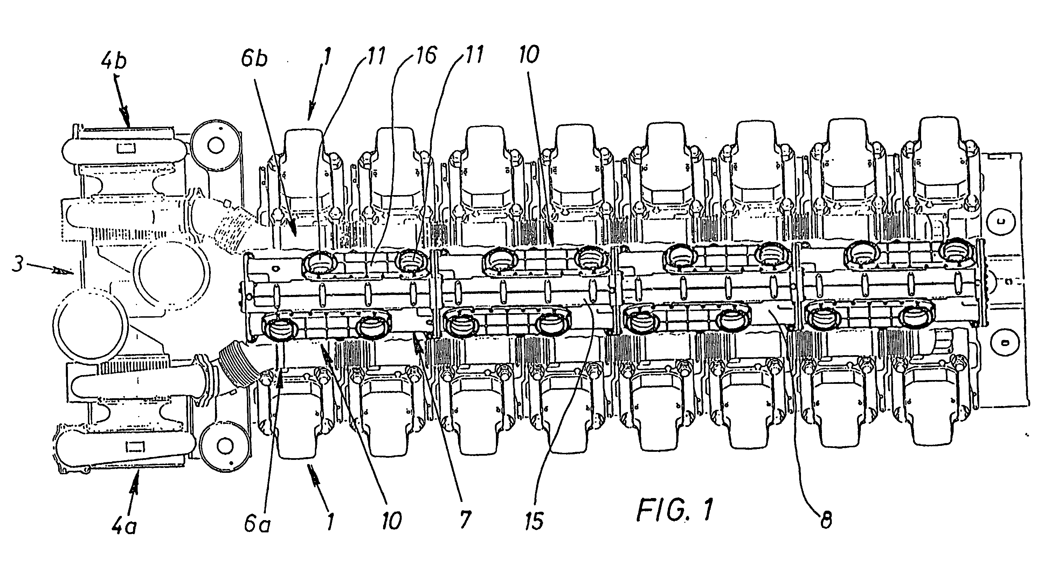

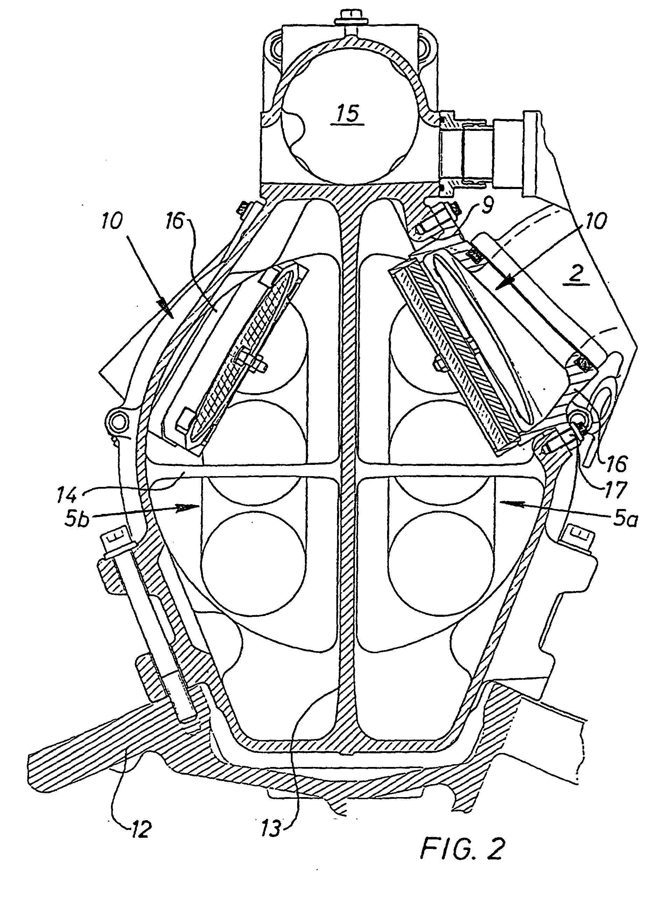

Die Brennkraftmaschine gemäß Figur 1 ist eine gasbetriebene 16-zylindrige Brennkraftmaschine in V-Bauart. Dementsprechend weist die Brennkraftmaschine 16 Zylindereinheiten 1 auf, die auf dem darunterliegenden Kurbelgehäuse 12 V-förmig angeordnet sind und mit der in dem Kurbelgehäuse 12 angeordneten Kurbelwelle verbunden sind. Die einzelnen Zylindereinheiten 1 bestehen aus einem Zwischengehäuse, in daß das Zylinderrohr mitsamt Kolben und Pleuel eingesetzt ist und wobei das Zwischengehäuse von einem Zylinderkopf mit je einem Einlaßkanal 2 (Figur 2) und einem Auslaßkanal abgedeckt ist. Endseitig an der Brennkraftmaschine ist eine Konsole 3 angeordnet, in der die Ladeluftkühler eingesetzt sind und auf der zwei Abgasturbolader 4a, 4b angeordnet sind. In dieser Konsole 3 sind im übrigen zwei walzenförmige Drehschieber 5a, 5b angeordnet, die jeweils drei Durchlässe (siehe Figur 2) aufweisen und die die Drosseleinrichtung für die der Brennkraftmaschine zuzuführende Gas-Luft-Gemischmenge bilden. Die Turbinen der Abgasturbolader 4a, 4b sind mit Abgasleitungen 6a, 6b verbunden, die wiederum mit den Auslaßkanälen der Zylindereinheiten 1 verschaltet sind. Die Turbinen der Abgasturbolader 4a, 4b saugen die Verbrennungsluft ggf. über Filteranlagen von der Umgebung an und leiten die hinter den Kompressoren verdichtete Luft über die Ladeluftkühler in die Konsole 3 durch die Drehschieber 5a und 5b und weiter in die Gemischleitung 7. Diese Gemischleitung 7 ist modulartig aufgebaut und weist insgesamt vier gleiche Module 8 auf.

Ein solches Modul 8 ist jeweils zwei gegenüberliegenden Zylindereinheiten 1, also vier Zylindern zugeordnet und weist gegenüberliegende versetzte, jeweils zwei Zylindereinheiten 1 zugeordnete Ausnehmungen 9 auf, in die jeweils eine Flammendurchschlagsicherungseinrichtung 10 eingebaut sind. Diese Flammendurchschlagsicherungseinrichtungen 10 weisen jeweils ein Gehäuse 16 mit zwei Ausgängen 11 auf, die jeweils mit einem Einlaßkanal 2 verbunden sind.

Der Schnitt durch die Gemischleitung 7 nach Figur 2 zeigt insbesondere deren inneren Aufbau und die Anordnung und Befestigung zweier gegenüberliegender Flammendurchschlagsicherungseinrichtungen 10. Die Gemischleitung 7 bzw. deren Module 8 sind direkt auf das Kurbelgehäuse 12 der Brennkraftmaschine aufgesetzt und mit diesem verschraubt. Die Module 8 weisen eine entlang der gesamten Brennkraftmaschine durchgehende Trennwand 13 auf, die die Module 8 in je einer Zylinderreihe zugeordnete Teilbereiche aufteilt. Querstreben 14 dienen zur Versteifung des Systems. Oberhalb von der Gemischleitung 7 ist eine Kühlwasserrückflußleitung 15 einstückig mit der Gemischleitung 7 verbunden, die das die Zylinderrohre und die Zylinderköpfe in dieser Reihenfolge durchströmende Kühlwasser sammelt und ebenfalls in Richtung zu der Konsole 3 leitet. Endseitig der Gemischleitung 7 sind in der Konsole 3 die Drehschieber 5a, 5b erkennbar.

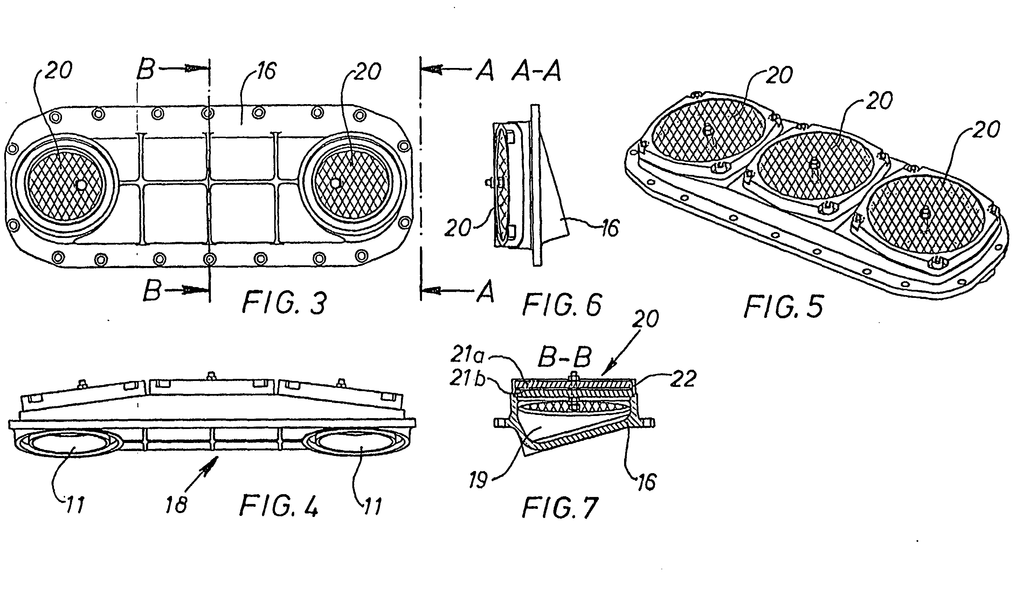

In die einzelnen Ausnehmungen 9 ist das in den Figuren 3 bis 7 näher dargestelltes Gehäuse 16 einer Flammendurchschlagsicherungseinrichtung 10 eingesetzt und mit Schrauben 17 verschraubt.

Figur 3 zeigt eine Ansicht auf das Gehäuse 16 von deren Auslaßseite 18 mit den beiden Ausgängen 11, die - wie zuvor beschrieben - mit den Einlaßkanälen 2 zusammenwirken. Durch diese beiden Ausgänge 11 ist durch den Innenraum 19 des Gehäuses 16 die Sicht auf die den Ausgängen 11 gegenüberliegenden Flammendurchschlagsicherungen 20 gegeben. Jede der Flammendurchschlagsicherungen 20 weist einen Aufbau auf, der in Figur 7 dargestellt ist. Sie weisen zwei Bandsicherungen 21a, 21b auf, die in einen sogenannten Rostkäfig 22 eingespannt und in dem Ausführungsbeispiel auf einen Abstand von ca. 3 mm getrennt gehalten sind. Sie bestehen im wesentlichen aus einem glatten und einem schräg geriffelten Band aus rostfreiem Stahl von je 10 mm Breite und 0,2 mm Dicke. Die Bänder sind in dichten Lagen aufgerollt, so daß aus ihnen eine Scheibe mit einer Vielzahl gleich großer Kanäle mit angenähert dreieckigem Querschnitt gebildet werden.

Wie insbesondere der Figur 5 zu entnehmen ist, sind die einzelnen Flammendurchschlagsicherungen 20 mit jeweils vier Schrauben an dem Gehäuse 16 verschraubt, wobei das Gehäuse auf der in die Gemischleitung 7 hineinragenden Seite leicht trapezförmig ausgebildet ist, so daß die beiden seitlichen Flammendurchschlagsicherungen 20 in ihren Endbereichen weniger weit in die Gemischleitung 7 hineinstehen und somit die Strömung des Gasgemisches kaum beeinflussen. Dies ist im übrigen auch der Seitenansicht des Gehäuses 16 gemäß Figur 6 zu entnehmen.

## Patentansprüche

1. Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinderrohr bewegbar ist, wobei in dem Zylinderkopf eingelassene Gaswechselventile über zumindest je einen Auslasskanal und einen Einlasskanal mit einer Abgasleitung und einer Gemischleitung verbunden sind, und wobei eine Flammendurchschlagsicherungseinrichtung im Bereich zwischen Einlasskanal und Gemischleitung angeordnet ist,
**dadurch gekennzeichnet, dass** die Brennkraftmaschine gasbetrieben ist, dass die Flammendurchschlagsicherungseinrichtung (10) ein Gehäuse (16) mit zwei Auslässen (11) aufweist, das in die Gemischleitung (7) eingesetzt ist und dass eine Flammendurchschlagsicherungseinrichtung (10) zwei Einlasskanälen (2) zugeordnet ist.

2. Brennkraftmaschine nach Anspruch 1 ,
**dadurch gekennzeichnet, dass** das Gehäuse (16) auf der den Auslässen (11) gegenüberliegenden Seite Einlassöffnungen aufweist, die in einen Innenraum (19) des Gehäuses (16) und von diesen in die Auslässe (11) münden.

3. Brennkraftmaschine nach Anspruch 2,
**dadurch gekennzeichnet, dass** drei Einlassöffnungen in das Gehäuse (16) einmünden.

4. Brennkraftmaschine nach Anspruch 2 oder 3,
**dadurch gekennzeichnet, dass** in die Einlassöffnungen Flammendurchschlagsicherungen (20) einsetzbar sind.

5. Brennkraftmaschine nach einem der vorherigen Ansprüche,
**dadurch gekennzeichnet, dass** die Gemischleitung (7) modular aufgebaut ist.

6. Brennkraftmaschine nach Anspruch 5,
**dadurch gekennzeichnet, dass** ein Modul (8) der Gemischleitung (7) bei einem Reihenmotor zwei Zylindern oder bei einem V-Motor vier Zylindern zugeordnet ist.

## Claims

1. Internal combustion engine having a crankcase, in which a crankshaft is mounted rotatably, on which crankshaft there is articulatedly mounted at least one connecting rod which bears a piston which can move in a cylinder tube covered by a cylinder head, gas exchange valves which are recessed in the cylinder head being connected, via in each case at least one outlet port and inlet port, to an exhaust pipe and a mixture pipe, and a flame arrester device being arranged in the region between the inlet port and the mixture pipe, **characterized in that** the internal combustion engine is gas-operated, **in that** the flame arrester device (10) has a housing (16) with two outlets (11) which is inserted into the mixture line (7), and **in that** a flame arrester device (10) is assigned to two inlet ports (2).

2. Internal combustion engine according to Claim 1, **characterized in that** the housing (16), on the opposite side from the outlet (11) has inlet openings which open out into an interior (19) of the housing (16) and, from there, into the outlets (11).

3. Internal combustion engine according to Claim 2, **characterized in that** three inlet openings open out into the housing (16).

4. Internal combustion engine according to Claim 2 or 3, **characterized in that** flame arresters (20) are inserted into the inlet openings.

5. Internal combustion engine according to one of the preceding claims, **characterized in that** the mixture line (7) is of modular construction.

6. Internal combustion engine according to Claim 5, **characterized in that** a module (8) of the mixture line (7) is assigned to two cylinders in the case of an inline engine or to four cylinders in the case of a V engine.

## Revendications

1. Moteur à combustion interne avec un carter de vilebrequin dans lequel un vilebrequin est logé de manière rotative, sur lequel au moins une bielle est articulée, laquelle porte un piston pouvant se mouvoir dans un tuyau de cylindre recouvert par une culasse de cylindre, des soupapes de gaz à deux voies encastrées dans la culasse de cylindre étant reliées via respectivement au moins un canal d'échappement et un canal d'admission à un collecteur d'échappement et à une conduite à mélange, et un dispositif de protection contre le retour de flamme étant aménagé dans la zone entre le canal d'admission et la conduite à mélange,
**caractérisé en ce que**
le moteur à combustion interne fonctionne au gaz, **en ce que** le dispositif de protection contre le retour de flamme (10) présente un boîtier (16) avec deux échappements (11) lequel est placé dans la conduite à mélange (7), et **en ce qu'**un dispositif de protection contre le retour de flamme (10) est associé à deux canaux d'admission (2) .

2. Moteur à combustion interne selon la revendication 1, **caractérisé en ce que** le boîtier (16) présente des ouvertures d'admission sur le côté situé en vis à vis des échappements (11), lesquelles débouchent dans un espace intérieur (19) du boîtier (16), et en partant de celui-ci, dans les échappements (11).

3. Moteur à combustion interne selon la revendication 2, **caractérisé en ce que** trois ouvertures d'admission débouchent dans le boîtier (16).

4. Moteur à combustion interne selon l'une quelconque des revendications 2 ou 3, **caractérisé en ce que** des protections contre le retour de flamme (20) peuvent être placées dans les ouvertures d'admission.

5. Moteur à combustion interne selon l'une quelconque des revendications précédentes, **caractérisé en ce que** la conduite à mélange (7) est de configuration modulaire.

6. Moteur à combustion interne selon la revendication 5, **caractérisé en ce qu'**un module (8) de la conduite à mélange (7) est associé à deux cylindres en cas de moteur à cylindres en ligne, ou à quatre cylindres en cas de moteur en V.
